# EUROPEAN PATENT APPLICATION

(11) **EP 1 270 203 A1**
(43) Date of publication of application: **02.01.2003**
(21) Application number: 01906298.3
(22) Date of filing: 26.02.2001
(51) Int. Cl.: B32B 27/00

(54) **HEAT-SHRINKABLE POLYOLEFIN FILM**

(30) Priority: 02.03.2000 JP 2000057399; 19.12.2000 JP 2000385209
(71) Applicant: C.I. Kasei Co., Ltd., Tokyo 104-8321 (JP)
(72) Inventor: SATANI, Shoichi, C.I. Kasei Co., Ltd., Tokyo 104-8321 (JP); TAYA, Naoki, C.I. Kasei Co., Ltd., Tokyo 104-8321 (JP); SHIRAISHI, Akihiko, C.I. Kasei Co., Ltd., Tokyo 104-8321 (JP)
(74) Representative: Vuillermoz, Bruno
(86) International application number: JP0101405
(87) International publication number: WO01064435

(57) **Abstract**

The present invention relates to a heat shrinkable polyolefin film preferably for a label to be attached to a PET bottle and the like. Improvement of in the lightness, the solvent sealing property, and transparency is an object. The heat shrinkable polyolefin film according to the present invention is a laminate comprising surface layers composed of a resin material containing a specific cyclic olefin resin as a main component, and an intermediate layer composed of a resin material containing a polyethylene resin as a main component.

## Description

### Technical Field

The present invention relates to a heat shrinkable polyolefin film for manufacturing a cylindrical label to be easily attached by solvent sealing, and to PET bottles to which the cylindrical label is attached with the cylindrical label.

The present application is based on patent applications filed in Japan (Japanese Patent Application Nos. 2000-57399 and 2000-385209), and the described contents of said Japanese applications are incorporated as a part of the present specification.

### Background Art

In recent years, recycling of bottles made from polyethylene terephthalate (hereinafter called PET bottles) to which heat shrinkable cylindrical labels are attached is frequently carried out. As a recycling method, in general, a method of crushing spent PET bottles is adopted to obtain recycled PET flakes and recycled PET pellets.

Particularly, the spent PET bottles are crushed into pieces having a size of several millimeters to 10 mm per square, and subsequently, pieces of labels are removed from the pieces of the spent PET bottles by the force of air. Furthermore, pieces of caps made of aluminum are removed from the pieces of the spent PET bottles to obtain recycled PET flakes and recycled PET pellets from the pieces of the spent PET bottles.

However, the separation method by the force of air is not perfect. If the pieces of labels have a specific gravity of less than 1, a separation method using water and relative specific gravities is adopted because of its simplicity and large treatment capacity, which is desirable. Accordingly, it is desired that the cylindrical label composed of a heat shrinkable film for attaching to a PET bottle have a specific gravity of less than 1.

Heat shrinkable films having a specific gravity of less than 1 have been developed, with various films being composed of heat shrinkable polyolefins.

As the heat shrinkable film to be used in manufacturing a cylindrical label, a heat shrinkable film composed of polyvinyl chloride, polystyrene, polyester, polyolefin, or the like is known. Films other than polyolefin can be attached to a bottle by the solvent sealing method wherein the film is cylindrically molded while one end of the film is applied with a solvent, so as to make the width direction of the printed film become the circumferential direction. Therefore, the cylindrically molded film is divided into parts each having a predetermined length, and the divided film can be attached to the bottle.

However, since a heat shrinkable film composed of polyolefin has a high solvent resistance, the film cannot be molded cylindrically by the above-described solvent sealing method. The film is usually molded using adhesives composed of urethane or the like after a corona treatment. As a result, the attachment speed becomes slow, and curing for one to a few days is required when adhesives are used.

There is substantially no heat shrinkable film having a light weight which is to be separated using relative specific gravities and to be applied by the solvent sealing method.

### Disclosure of Invention

An object to be solved by the present invention is to provide a heat shrinkable film made of polyolefin which is attached and molded cylindrically using the solvent sealing method to make a cylindrical label so as to obtain an advantage in productivity, wherein the film has a specific gravity of less than 1 so as to be separated from PET bottles by relative specific gravities so as to obtain an advantage in recycling.

A heat shrinkable polyolefin film according to the present invention is a laminate comprising surface layers composed of a resin material containing a cyclic olefin resin having a glass transition temperature of 50 to 75°C as a main component, and an intermediate layer composed of a resin material containing a polyethylene resin as a main component, wherein the total thickness of the surface layer is 10 to 40% and the thickness of the intermediate layer is 60 to 90% of the total thickness of the film, the coefficient of heat shrinkage in the direction of main shrinkage is 35% or more and the coefficient of heat shrinkage in the direction orthogonal to the direction of main shrinkage is 15% or less after soaking in a glycerin bath at 100°C for 30 seconds.

The above heat shrinkable polyolefin film may have a specific gravity of 0.97 g/cm³ or less.

Furthermore, the polyethylene resin in the intermediate layer may be a copolymer of ethylene and α-olefin having 4 to 8 carbon atoms.

The cyclic olefin resin is desirably a random copolymer of α-olefin such as ethylene and propylene and cyclic olefin.

A label according to the present invention is composed of the above-described heat shrinkable polyolefin film.

The above-described label is attached to a resin bottle.

### Brief Description of Drawings

Fig. 1 is a cross-sectional view illustrating an example of the layer constitution of a heat shrinkable polyolefin film according to the present invention.

Fig. 2 is a cross-sectional view illustrating another example of the layer constitution of a heat shrinkable polyolefin film according to the present invention.

### Best Mode for Carrying Out the Invention

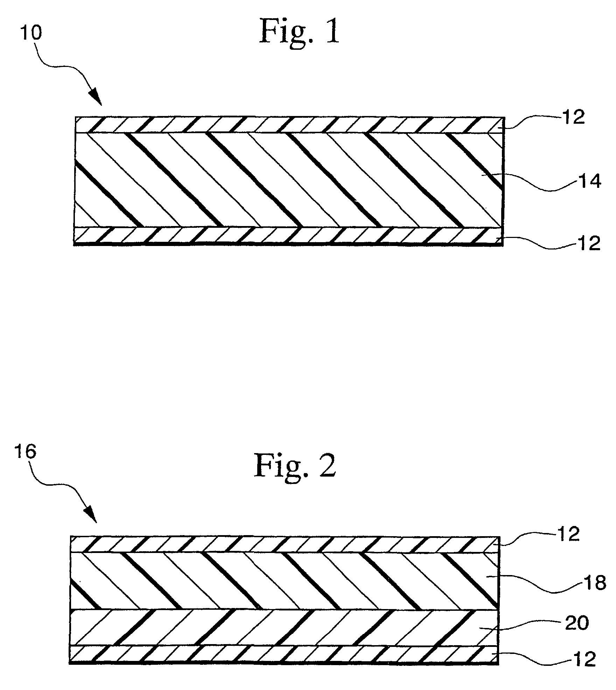

A heat shrinkable polyolefin film according to the present invention is a laminate comprising at least two types of surface layers, which are provided at exposed sides, and an intermediate layer. Preferably, the laminate is composed of three or more layers comprising two surface layers, which are provided as both outermost layers of the laminate, and an intermediate layer which is provided between the surface layers. As an example of a three-layer constitution, as shown in Fig. 1, a laminate 10 comprises surface layers 12, 12 and an intermediate layer 14. Furthermore, within the scope of the present invention, a layer other than these surface layers and the intermediate layer can be adopted so that the laminate has a constitution of four or more layers. For example, as shown in Fig. 2, a laminate 16 which is a four-layer constitution comprises surface layers 12, 12, an intermediate layer 18, and another layer 20.

The laminate according to the present invention comprises the intermediate layer composed of resin materials containing a polyethylene resin as a main component. The intermediate layer ensures a low specific gravity and transparency in the film while ensuring high heat shrinkability.

The label to be attached to the bottle desirably has transparency in addition to high heat shrinkability.

As the polyethylene resin which is the main component of the resin material composing the intermediate layer, a monopolymer of ethylene and various copolymers composed of ethylene and another monomer are used. In particular, a polyethylene copolymer composed of a copolymer of ethylene and α-olefin having 4 to 8 carbon atoms is desirable, and more particularly, L-low density polyethylene (L-LDPE) in which Ziegler catalysts or metallocene catalysts are used is desirable. For example, if the heat shrinkable polyolefin film of the present invention is recycled to the intermediate layer (described later), L-LDPE used with metallocene catalysts is desirable since the L-LDPE has superior transparency.

The polyethylene resin as the main component must be contained in an amount of 50% by weight in the resin material.

Furthermore, another olefin resin or petroleum resin can be mixed in the resin material of the intermediate layer without deteriorating the heat shrinkability and transparency of the resin material.

As the petroleum resin, an aliphatic hydrocarbon, alicyclic hydrocarbon, hydrogenated hydrocarbon, and the like are used. For examples of these, "ARKON" manufactured by Arakawa Chemical Industries, Ltd., and "CLEARON" manufactured by Yasuhara Chemical Co., Ltd. are used. The petroleum resin is mixed in an amount of 0 to 30% by weight, and preferably, 0 to 15% by weight with the resin material. If the petroleum resin is more than 30% by weight, the film strength decreases, which is not desirable.

Furthermore, as the above other olefin resins, ethylene-butene-propylene copolymer resin, butene-propylene copolymer resin, ethylene-butene-propylene copolymer resin, polybutene resin, ionomer resin, LDPE resin by a high-pressure method, EVA resin, and the like are used. These resins can be mixed in an amount of 20% by weight or less, preferably, 10% by weight or less. If these resin is more than 20% by weight, the transparency largely decreases, which is not desirable.

Furthermore, as the resin material for the intermediate layer, cyclic olefin resin can be mixed in an amount of 30% by weight or less. If the resin is more than 30% by weight, the transparency tends to decrease. If the resin is 30% by weight or less in the resin material of the intermediate layer, the recycled heat shrinkable polyolefin film according to the present invention comprising cyclic olefin resin in addition to polyethylene resin may be mixed with the resin material for the intermediate layer. That is, the heat shrinkable polyolefin film which is used once can be recycled for use as a resin material for the intermediate layer according to the present invention. Therefore, the heat shrinkable polyolefin film according to the present invention can be effectively used, so it is environmentally desirable.

The heat shrinkable polyolefin film according to the present invention comprises a surface layer composed of resin materials having a specific cyclic olefin resin as a main component. Due to the surface layer is provided, a solvent sealing property is exhibited without deteriorating the transparency and lightness in terms of weight.

The cyclic olefin resin used in the surface layer is a common generic term, and for example, a monopolymer of cyclic olefin, a random copolymer of cyclic olefin and α-olefin such as ethylene and propylene, a hydrogenated (co)polymer of these polymers and copolymers, or graft modification of these polymers and copolymers. In particular, norbornene, tetracyclododecene, and the like are used.

The cyclic olefin resin has a glass transition temperature of 50°C to 75°C, preferably, 55°C to 73°C. If the glass transition temperature is higher than 75°C, the orientation temperature excessively increases which decreases the heat shrinkability of the heat shrinkable polyolefin film. If the glass transition temperature is lower than 50°C, natural shrinkage increases, which is not desirable.

As the cyclic olefin resins, for example, "ZEONOR" (trade name) manufactured by Zeon Corporation, "APEL" (trade name) manufactured by Mitsui Chemicals, Inc., and "TOPAS" (trade name) manufactured by Hoechst AG are being marketed, and among these, cyclic olefin resins having the above-described glass transition temperature can be used.

Furthermore, the resin material composing the surface layer may be mixed with another component, within the scope of the present invention, in addition to the cyclic olefin resin. In the resin materials of the surface layer, the cyclic olefin resin as the main component is desirably included in an amount of 95% by weight or more. For example, polyethylene resin can be mixed in an amount of 5% by weight or less. If the resin is more than 5% by weight, the solvent sealing property decreases, which is not desirable.

In the heat shrinkable polyolefin film according to the present invention, the total thickness of the surface layers needs to be 10 to 40% and the thickness of the intermediate layer needs to be 60 to 90% of the total thickness of the film. If the thickness of the intermediate layer is less than 60%, the heat shrinkability, lightness, and the like tend to deteriorate.

In the present invention, there can be layers other than the surface layers and the intermediate layer, and further, the layers need to be composed of materials and to have thicknesses which are within the scope of the heat shrinkability, lightness, and the like of the present invention. As the above-described other layer, for example, a layer composed of an EVA resin, polypropylene resin, and polyamide resin can be used. Among these, a layer composed of an olefin resin is desirable. In particular, a film which is composed of only an olefin resin is desirable in view of lightness, recycling, and the like.

The heat shrinkable polyolefin film according to the present invention can have a specific gravity of 1 g/cm³ or less, and further, due to coordinating the material and the thickness of the film so as to be within the scope of the present invention, the specific gravity can be 0.97 g/cm³ or less. When the film has a specific gravity of 0.97 g/cm³ or less, the separation method by relative specific gravities is improved in view of speed, accuracy, and the like, so the ability to separate becomes more superior.

Next, a production method for the heat shrinkable polyolefin film will be explained.

The film is manufactured using a conventional co-extrusion technique or stretching technique. For example, a sheet is co-extruded by a T-die to a flat sheet and the flat sheet is cooled and drawn so as to be a three-layer structure which comprises two surface layers of a film composed of resin materials having a cyclic olefin resin as a main component and an intermediate layer of a film composed of resin materials having a polyethylene resin as a main component. Subsequently, the sheet is stretched to 3 to 10 times in the transverse direction by a tenter and, as the need arises, the sheet is annealed while relaxing to 0 to 12% in the width direction. Subsequently, the film is wound to obtain a heat shrinkable polyolefin film.

A conventional biaxial stretching method may be used for the stretching. Furthermore, a sheet may be co-extruded by a circular die to a tubular sheet and the tubular sheet is stretched as it is, or the tubular sheet is cut into a flat shape and the flat sheet is stretched as described above.

The heat shrinkable polyolefin film according to the present invention has a coefficient of heat shrinkage in the direction of main shrinkage of 35% or more and a coefficient of heat shrinkage in the direction orthogonal to the direction of main shrinkage of 15% or less after soaking in a glycerin bath at 100°C for 30 seconds. More preferably, the coefficient of heat shrinkage in the direction of main shrinkage is 40% or more and the coefficient of heat shrinkage in the direction orthogonal to the direction of main shrinkage is 10% or less. As described above, since the coefficient of heat shrinkage in any arbitrary direction is high and the coefficient of heat shrinkage in the direction orthogonal to of the arbitrary direction is low, the film can be shrinkably attached strongly with a good appearance when the film is used as a cylindrical heat shrinkage label and the like.

The direction of main shrinkage of the present invention means the direction in which the coefficient of heat shrinkage of the film is highest.

The heat shrinkage polyolefin film according to the present invention can be utilized in various usages; particularly, the film is desirably used for labels, and more particularly, labels for attaching to various bottles because of superior heat shrinkage, lightness, solvent sealing property, and transparency.

When the film is used as a label for attaching to a bottle, there are the steps of molding the film cylindrically by solvent sealing, covering the bottle with the cylindrical film, and attaching the cylindrical film to the bottle by heat shrinkage to make a unit.

When the heat shrinkable polyolefin film according to the present invention is molded into a cylindrical film by solvent sealing, examples of the solvent are an aliphatic hydrocarbon solvent such as n-hexane and n-pentane, an alicyclic hydrocarbon solvent such as cyclohexane, an aromatic hydrocarbon solvent such as toluene, xylene, and benzene, and the like. In particular, a cyclohexane/n-hexane mixed solvent is desirably used.

These solvents are applied to a predetermined place on the surface of the heat shrinkable polyolefin film, and another place of the surface of the film overlaps the solvent applied part. The overlapped portions are pressed and attached to each other to be molded cylindrically.

The label is attached to the bottle by molding the film cylindrically so that the direction of the high coefficient of shrinkage coincides with the circumferential direction, providing the cylindrical film at a predetermined place, and heating the predetermined place, so that the film is attached to the bottle to make a unit. The heating temperature when heat shrinking is conducted needs to be a temperature such that the bottle itself, in particular, a resin bottle, is not affected and the label sufficiently shrinks. For example, when the label is attached to a polyester terephthalate bottle, it is desirably heated at 70 to 90°C for 1 to 30 seconds.

### Examples

Representative examples of the present invention will be explained as follows.

### Example 1

As the resin material comprising a polyethylene resin as a main component composing the intermediate layer, a composition comprising 84% by weight of an ethylene-α-olefin copolymer, and 16% by weight of a cyclic olefin copolymer resin is used. As the surface layers, 100% by weight of the above-described cyclic olefin copolymer resin ("ZEONOR L-7") is used.

The above-described ethylene-α-olefin copolymer resin is "EVOLUE SP-2020" manufactured by Mitsui Chemicals, Inc., having a density of 0.916 g/cm³, MFR of 1.5 g/10 min, and a melting point of 117°C. Furthermore, the cyclic olefin copolymer resin is "ZEONOR L-7" manufactured by Zeon Corporation, having a glass transition temperature (Tg) of 70°C.

Each resin material is put into an extruder. A heat shrinkable polyolefin film having a thickness of 50 µm (thickness of each layer: 5 µm, 40 µm, and 5 µm) is obtained by extruding from a T-die at 220°C so as to have three layers, cooling and solidifying by a cooling roll at 40°C, stretching to six times in the transverse direction by a tenter at 80°C, relaxing to 8% in the width direction in the tenter, and annealing at 75°C for five seconds.

The specific gravity, coefficient of heat shrinkage, strength of solvent sealing, and haze of the film are measured. The results are shown in Table 1.

### Example 2

As the resin material comprising a polyethylene resin as a main component composing the intermediate layer, a composition comprising 80% by weight of an ethylene-α-olefin copolymer ("EVOLUE SP-2020" manufactured by Mitsui Chemicals, Inc.), 10% by weight of a petroleum resin ("ARKON" manufactured by Arakawa Chemical Industries, Ltd.), and 10% by weight of a cyclic olefin copolymer resin ("ZEONOR L-7" having Tg of 70°C, manufactured by Zeon Corporation) is used. As the surface layers, 100% by weight of the above-described cyclic olefin copolymer resin ("ZEONOR L-7") is used.

Each resin material is put into an extruder. The heat shrinkable polyolefin film having a thickness of 50 µm (thickness of each layer: 5 µm, 40 µm, and 5 µm) is obtained by extruding from a T-die at 220°C so as to have three layers, cooling and solidifying by a cooling roll at 40°C, stretching to six times in the transverse direction by a tenter at 80°C, relaxing to 8% in the width direction in the tenter, and annealing at 75°C for five seconds.

The specific gravity, coefficient of heat shrinkage, strength of solvent sealing, and haze of the film are measured. The results are shown in Table 1.

### Example 3

As the resin material comprising a polyethylene resin as a main component composing the intermediate layer, a composition comprising 60% by weight of an ethylene-α-olefin copolymer ("EVOLUE SP-2020" manufactured by Mitsui Chemicals, Inc.), and 40% by weight of the composition obtained by crushing the heat shrinkable polyolefin film manufactured in the above Example 1 is used. As the surface layers, 100% by weight of the above-described cyclic olefin copolymer resin ("ZEONOR L-7") is used.

Each resin material is put into an extruder. The heat shrinkable polyolefin film having a thickness of 50 µm (thickness of each layer: 5 µm, 40 µm, and 5 µm) is obtained by extruding from a T-die at 220°C so as to have three layers, cooling and solidifying by a cooling roll at 40°C, stretching to six times in the transverse direction by a tenter at 80°C, relaxing to 8% in the width direction in the tenter, and annealing at 75°C for five seconds.

The specific gravity, coefficient of heat shrinkage, strength of solvent sealing, and haze of the film are measured. The results are shown in Table 1.

### Example 4

As the resin material comprising a polyethylene resin as a main component composing the intermediate layer, a composition comprising 85% by weight of an ethylene-α-olefin copolymer ("EVOLUE SP-2020" manufactured by Mitsui Chemicals, Inc.), and 15% by weight of a cyclic olefin copolymer resin ("ZEONOR L-7" having Tg of 70°C, manufactured by Zeon Corporation) is used. As the surface layers, 100% by weight of the above-described cyclic olefin copolymer resin ("ZEONOR L-7") is used.

Each resin material is put into an extruder. A heat shrinkable polyolefin film having a thickness of 50 µm (thickness of each layer: 5 µm, 40 µm, and 5 µm) is obtained by extruding from a T-die at 220°C so as to have three layers, cooling and solidifying by a cooling roll at 40°C, and stretching to six times in the transverse direction by a tenter at 78°C.

The specific gravity, coefficient of heat shrinkage, strength of solvent sealing, and haze of the film are measured. The results are shown in Table 1.

### Example 5

As the resin material comprising a polyethylene resin as a main component composing the intermediate layer, a composition comprising 80% by weight of an ethylene-α-olefin copolymer ("EVOLUE SP-2020" manufactured by Mitsui Chemicals, Inc.), 10% by weight of a petroleum resin ("ARKON P-140" manufactured by Arakawa Chemical Industries, Ltd.), and 10% by weight of a cyclic olefin copolymer resin ("ZEONOR L-7" having Tg of 70°C, manufactured by Zeon Corporation) is used. As the surface layers, 100% by weight of the above-described cyclic olefin copolymer resin ("ZEONOR L-7") is used.

Each resin material is put into an extruder. A heat shrinkable polyolefin film having a thickness of 50 µm (thickness of each layer: 5 µm, 40 µm, and 5 µm) is obtained by extruding from a T-die at 220°C so as to have three layers, cooling and solidifying by a cooling roll at 40°C, and stretching to six times in the transverse direction by a tenter at 80°C.

The specific gravity, coefficient of heat shrinkage, strength of solvent sealing, and haze of the film are measured. The results are shown in Table 1.

### Comparative Example 1

A heat shrinkable polyolefin film having the thickness of 50 µm (thickness of each layer: 5 µm, 40 µm, and 5 µm) is obtained in the same way as described in Example I except that 100% by weight of an ethylene-α-olefin copolymer ("EVOLUE SP-2020" manufactured by Mitsui Chemicals, Inc.) is used as the surface layers, and the resin material is stretched to six times in the transverse direction by a tenter at 60°C and annealed at 55°C for five seconds.

The specific gravity, coefficient of heat shrinkage, strength of solvent sealing, and haze of the film are measured. The results are shown in Table 2.

### Comparative Example 2

A heat shrinkable polyolefin film having the thickness of 50 µm (thickness of each layer: 5 µm, 40 µm, and 5 µm) is obtained in the same way as described in Example 1 except that 80% by weight of a cyclic olefin copolymer resin ("ZEONOR L-7" having Tg of 70°C, manufactured by Zeon Corporation) and 20% by weight of an ethylene-α-olefin copolymer ("EVOLUE SP-2020" manufactured by Mitsui Chemicals, Inc.) are used as the surface layers.

The specific gravity, coefficient of heat shrinkage, strength of solvent sealing, and haze of the film are measured. The results are shown in Table 2.

### Comparative Example 3

As an intermediate layer, a resin material comprising 80% by weight of an ethylene-propylene random copolymer resin ("S-131" manufactured by Mitsui Chemicals, Inc.) which is a polypropylene copolymer resin, and 20% by weight of a cyclic olefin copolymer resin ("ZEONOR L-7" having Tg of 70°C, manufactured by Zeon Corporation) is used. As the surface layers, 100% by weight of a cyclic olefin copolymer resin ("ZEONOR L-7") is used.

Each resin material is put into an extruder. A heat shrinkable polyolefin film having a thickness of 50 µm (thickness of each layer: 5 µm, 40 µm, and 5 µm) is obtained by extruding from a T-die at 220°C so as to have three layers, cooling and solidifying by a cooling roll at 40°C, stretching to six times in the transverse direction by a tenter at 80°C, relaxing to 8% in the width direction in the tenter, and annealing at 75°C for five seconds.

The specific gravity, coefficient of heat shrinkage, strength of solvent sealing, and haze of the film are measured. The results are shown in Table 2.

The methods of measuring the various properties are as follows.

### (Coefficient of heat shrinkage)

The manufactured film was divided into squares of 100 mm × 100 mm to be test pieces. Subsequently, these test pieces were soaked in glycerin at 100°C for 30 seconds and immediately cooled by cold water, and the lengths L (mm) in the longitudinal transverse directions were measured.

Furthermore, the coefficients of heat shrinkage longitudinally and transversely were calculated using the following equation.

Heat shrinkage = (100 - L) / 100

### (Strength of solvent sealing)

Positions of 10 mm from both ends of the manufactured film in the transverse direction were sealed using a mixed solvent composed of 10% by weight of cyclohexane and 90% by weight of n-hexane by solvent sealing to make a cylindrical sample.

The sealed part of the cylindrical label was divided into pieces having a 5-mm length in the direction perpendicular to the circumferential direction. The pieces were set in an "autograph type tensile testing machine" manufactured by Shimadzu Corporation, and the sealing strength was measured at a stretching speed of 200 mm/min. by a 180° peeling test.

The evaluation criteria are as follows.
○ ... 50 g/5 mm or more
Δ ... 20 g/5 mm or more and less than 50 g/5 mm
× ... less than 20 g/5 mm

### (Transparency)

The value of haze of the manufactured films was measured by a hazemeter.

The evaluation criteria are as follows.
○ ... less than 6%
Δ ... 6% or more and less than 10%
× ... 10% or more

**Table 1**

| | | Example | | | | |
|---|---|---|---|---|---|---|
| | | 1 | 2 | 3 | 4 | 5 |
| Surface layer | Cyclic olefin resin | 100 | 100 | 100 | 100 | 100 |
| | Polyethylene resin | - | - | - | - | - |
| Intermediate layer | Polyethylene resin | 84 | 80 | 60 | 85 | 80 |
| | Cyclic olefin resin | 16 | 10 | - | 15 | 10 |
| | Petroleum resin | - | 10 | - | - | 10 |
| | Recycled polyolefin | - | - | 40 | - | - |
| Specific gravity of film (g/cm³) | | 0.94 | 0.94 | 0.94 | 0.94 | 0.95 |
| Coefficient of heat shrinkage (%) | Transverse | 44 | 49 | 42 | 62 | 70 |
| | Longitudinal | 9 | 6 | 8 | 9 | 9 |
| Strength of solvent sealing | | ○ | ○ | ○ | ○ | ○ |
| Transparency | | ○ | ○ | ○ | ○ | ○ |

**Table 2**

| | | Comparative Example | | |
|---|---|---|---|---|
| | | 1 | 2 | 3 |
| Surface layer | Cyclic polyolefin resin | - | 80 | 100 |
| | Polyethylene resin | 100 | 20 | - |
| Intermediate layer | Polyethylene resin | 84 | 84 | - |
| | Cyclic olefin resin | 16 | 16 | 20 |
| | Petroleum resin | - | - | - |
| | Recycled polyolefin | - | - | - |
| | Polypropylene copolymer resin | - | - | 80 |
| Specific gravity of film (g/cm³) | | 0.92 | 0.93 | 0.92 |
| Coefficient of heat shrinkage (%) | Transverse | 60 | 48 | 43 |
| | Longitudinal | 18 | 4 | 7 |
| Strength of solvent sealing | | × | Δ | ○ |
| Transparency | | ○ | ○ | Δ |

In Tables 1 and 2, the mixing ratio of each component of the surface layer and the intermediate layer is in % by weight.

As shown in Tables 1 and 2, the heat shrinkable polyolefin films of the above Examples have high strength of solvent sealing and transparency. On the other hand, the films of Comparative Examples 1 and 2 have a low ability for solvent sealing, and the film of Comparative Example 3 has poor transparency (value of haze was 7.4%).

### Industrial Applicability

The heat shrinkable polyolefin film according to the present invention is easily separated from other resins by the method using relative specific gravities because the film has a light weight with a specific gravity of less than 1. In particular, the film is easily separated from PET.

Furthermore, since solvent sealing can be applied, the cylindrical label can be molded easily and fast. Additionally, the film has superior transparency.

Therefore, as the heat shrinkable label to be attached to various bottles, in particular, bottles made from a resin such as PET, the film is extremely excellent and valuable in use.

Furthermore, since the film can be composed of only an olefin resin, defective articles occurring during the manufacturing of films, and collected articles which were once used as labels and the like can be recycled for use as the material for the intermediate layer according to the present invention, so it is highly recyclable.

The present invention is effective in other various embodiments within the scope of the present invention. The above-described embodiments are simply examples, and the present invention must not be limited thereto. The scope of the present invention is described by the claims and is not limited by the specification. Furthermore, modifications or improvements within the equivalent scope of the claims are included within the present invention.

## Claims

1. A heat shrinkable polyolefin film which is a laminate comprising surface layers composed of a resin material containing a cyclic olefin resin having a glass transition temperature of 50 to 75°C as a main component, and an intermediate layer composed of a resin material containing a polyethylene resin as a main component,
wherein a total thickness of the surface layers is 10 to 40% and a thickness of the intermediate layer is 60 to 90% of a total thickness of the film,
a coefficient of heat shrinkage in a direction of main shrinkage is 35% or more and a coefficient of heat shrinkage in a direction orthogonal to the direction of main shrinkage is 15% or less after soaking in a glycerin bath at 100°C for 30 seconds.

2. A heat shrinkable polyolefin film according to claim 1, having a specific gravity of 0.97 g/cm³ or less.

3. A heat shrinkable polyolefin film according to claim 1, wherein the polyethylene resin in the intermediate layer is a copolymer of ethylene and α-olefin having 4 to 8 carbon atoms.

4. A heat shrinkable polyolefin film according to claim 1, wherein the resin material containing the polyethylene resin as the main component in the intermediate layer comprises 30% by weight or less of the cyclic olefin resin having a glass transition temperature of 50 to 75°C.

5. A heat shrinkable polyolefin film according to claim 4, wherein the resin material containing the polyethylene resin as the main component in the intermediate layer comprises a composition recovered from spent heat shrinkable polyolefin film.

6. A heat shrinkable polyolefin film according to claim 1, wherein the resin material containing the cyclic olefin resin as the main component in the surface layers comprises 95 to 100% by weight of a cyclic olefin resin having a glass transition temperature of 50 to 75°C and 0 to 5% by weight of a polyethylene resin.

7. A heat shrinkable polyolefin film according to claim 1, wherein the cyclic olefin resin having a glass transition temperature of 50 to 75°C is a random copolymer of cyclic olefin and α-olefin.

8. A label composed of the heat shrinkable polyolefin film according to claim 1.

9. A label composed of the heat shrinkable polyolefin film according to claim 2.

10. A resin bottle to which the label according to claim 9 is attached.
